**Europäisches Patentamt**

**European Patent Office**

**Office européen des brevets**

(19)

(11) Numéro de publication: **0 035 456**
**B1**

(12) **FASCICULE DE BREVET EUROPEEN**

(45) Date de publication du fascicule du brevet: **15.02.84**

(51) Int. Cl.³: **H 05 B 3/72**, H 05 B 3/68, A 47 J 27/00

(21) Numéro de dépôt: **81400330.7**

(22) Date de dépôt: **04.03.81**

(54) **Surface chauffante, notamment pour usages culinaires, comprenant une résistance électrique de chauffage, son procédé de réalisation.**

(30) Priorité: **05.03.80 FR 8004891**

(43) Date de publication de la demande:
**09.09.81 Bulletin 81/36**

(45) Mention de la délivrance du brevet:
**15.02.84 Bulletin 84/7**

(84) Etats contractants désignés:
**AT BE CH DE GB IT LI NL SE**

(56) Documents cités:
**DE - C - 558 876**
**DE - C - 692 203**
**FR - A - 2 369 772**
**GB - A - 138 039**
**GB - A - 720 625**
**US - A - 2 774 524**

(73) Titulaire: **SEB S.A. Société Anonyme française**
**F-21260 Selongey (FR)**

(72) Inventeur: **Louet, Raymond**
**6, rue du Moulin**
**F-21260 Selongey (FR)**

(74) Mandataire: **Bouju, André**
**38 Avenue de la Grande Armée**
**F-75017 Paris (FR)**

Courier Press, Leamington Spa, England.

Surface chauffante notamment pour usages culinaires, comprenant une résistance
électrique de chauffage; son procédé de réalisation

La présente invention concerne une surface chauffante notamment pour usages culinaires, comprenant une résistance électrique de chauffage tubulaire fixée dans une gorge emboutie dans une feuille métallique.

L'invention vise également le procédé pour réaliser une telle surface chauffante.

Les résistances chauffantes électriques tubulaires, également appelées résistances blindées, comprennent une gaine extérieure en métal, par exemple en aluminium, remplie par un oxyde réfractaire et électriquement isolant, tel que la magnésie calcinée cet oxyde entourant un fil résistant électrique.

De telles résistances électriques sont utilisées très souvent dans les ustensiles culinaires à chauffage électrique, tels que friteuse, autocuiseur, cafetière, plaques de cuisson ou de réchauffage et analogues.

Dans ces ustensiles culinaires, les résistances électriques sont fixées à la feuille métallique qui constitue elle-même la paroi de l'ustensile. On connaît différents modes de fixation de ces résistances à une telle feuille métallique.

Selon l'un des procédés connus, résistance est logée dans une gorge de section en U, obtenue par emboutissage d'une bande métallique, et dont la base est brasée sur l'une des parois de l'ustensile de cuisson, en général le fond. Dans ce mode de fixation, la résistance est en contact avec la paroi de l'ustensile seulement suivant une ligne de contact, ce qui n'est pas favorable aux échanges thermiques entre la résistance et la paroi de l'ustensile. De plus, la fixation par brasage de la bande emboutie sur la paroi de l'ustensile est une opération délicate. Par ailleurs, les mauvaises conditions d'échange thermique de la résistance avec le fond de l'ustensile entraînent des risques surchauffe localisée de la résistance, susceptibles d'entraîner la détérioration de cette dernière.

Dans un autre procédé connu, la résistance est noyée dans une semelle moulée en métal, qui est elle-même brasée au fond du récipient à chauffer. Ce mode de fixation est satisfaisant au point de vue fiabilité mécanique et rendement des échanges thermiques. Cependant, ce mode de réalisation est très onéreux, ce que le rend difficilement applicable aux ustensiles culinaires.

Dans un troisième procédé connu, le fond ou la paroi latérale du récipient culinaire, ou la surface plane d'une plaque chauffante, est embouti de manière à y former une ou plusieurs gorges dans lesquelles est introduite la résistance électrique de chauffage. Un sertissage de la résistance, réalisé par rapprochement des parois de la gorge, maintient la résistance en place et assure la liaison thermique. La résistance électrique peut être introduite par l'intérieur du récipient, comme décrit par exemple dans la demande de brevet allemand publiée après examen n° 1 299 379. Dans ce cas, les extrémités de la résistance électrique doivent traverser la paroi de l'ustensile et leur étanchéité par brasure ou soudure est dans ce cas délicate. La résistance électrique peut également être introduite par l'extérieur, comme décrit par exemple dans le brevet américain n° 2 826 670. Dans ce cas, la sortie des extrémités de la résistance ne pose plus de problème d'étanchéité. Par contre, il subsiste dans le fond du récipient des reliefs dus aux gorges dans lesquelles sont fixées des résistances électriques. Ces reliefs sont d'une façon générale, inacceptables dans la plupart des ustensiles culinaires et en particulier, des récipients de cuisson et présentent dans tous les cas des difficultés de nettoyage de ces derniers.

Selon un autre procédé connu, la résistance électrique de chauffage est conformée selon une section demi-circulaire et elle est directement sertie dans une gorge obtenue par matriçage du fond du récipient. Ce procédé qui est décrit dans la demande de brevet allemand publiée avant examen n° 27 29 087 nécessite l'utilisation de feuilles métalliques épaisses. Par ailleurs, la surface d'échange thermique est dans ce cas, réduite à une fraction de la périphérie de la résistance électrique blindée.

Le fascicule de brevet allemand n° 692 203 décrit une surface chauffante conforme au preambule de la revendication.

Le but de la présente invention est de proposer une surface chauffante, notamment pour ustensile culinaire dans laquelle la résistance électrique de chauffage est fixée à une feuille métallique d'une façon simple, efficace, économique et dans des conditions favorables à l'échange thermique entre la résistance et cette feulle métallique.

L'invention vise une surface chauffante notamment pour usages culinaires comportant une résistance électrique de chauffage tubulaire placée contre une première face d'une feuille métallique dont la deuxième face est destinée à être mise en regard de la matière à chauffer lors de l'utilisation, ladite résistance étant maintenue contre la feuille métallique par sertissage dans une gorge qui est formée par emboutissage de la feuille et qui comporte au moins un bord façonné en forme de pli définissant deux bandes qu'il relie, la première de ces bandes étant adjacente à la résistance et se raccordant au fond de la gorge.

Suivant l'invention, cette surface chauffante est caractérisée en ce que la deuxième bande présente une surface adjacente à celle de la première bande de façon que les surfaces de ces bandes soient jointives, et cette deuxième bande s'étend sensiblement jusqu'au fond de la gorge de façon que ce fond soit proche de la partie de feuille qui fait suite à cette deuxième bande et que la surface chauffante soit ainsi sensiblement dépourvue de relief saillant du côté de la deuxième face de la feuille métallique.

La résistance électrique de chauffage tubulaire est ainsi solidement maintenue entre les deux bandes pliées, l'une sur l'autre de la feuille métallique et entre le prolongement de la bande intérieure adjacente à la résistance qui constitue le fond de la gorge.

Cette réalisation de gorge est à la fois simple et favorable à l'échange thermique entre la résistance et la feuille, compte tenu de l'excellent contact mécanique qu'il est possible d'obtenir entre cette feuille et cette résistance.

Par ailleurs, étant donné que le fond de la gorge est sensiblement dans le prolongement des parties de la feuille situées de part et d'autre de la gorge, il est possible d'obtenir un article chauffant présentant sur sa face opposée à la résistance, une surface sensiblement dépourvue de relief saillant, sans communication directe avec la résistance électrique, ce qui est favorable notamment dans le cas de récipients culinaires.

Selon une version avantageuse de l'invention, les parties de la feuille situées de part et d'autre de la gorge sont sensiblement planes, et le fond de la gorge est situé sensiblement dans le plan de ces parties planes.

Ainsi, l'une des faces de la surface chauffante est sensiblement plane, ce qui est favorable au nettoyage de celle-ci, tout en étant sans communication directe avec la résistance électrique, ce qui évite tout risque de surchauffe localisée.

Selon une version préférée de l'invention, la gorge comprend deux parois latérales constituées chacune par un pli de la feuille définissant deux bandes sensiblement jointives de cette feuille et enveloppant chacune en partie la résistance, les deux bandes intérieures adjacentes à la résistance étant reliées par une portion de ladite feuille constituant le fond de la gorge, cette portion de la feuille étant située dans le prolongement des parties de la feuille situées de part et d'autre de la gorge.

Cette réalisation qui est légèrement plus compliquée que la précédente, présente l'avantage de permettre une fixation extrêmement fiable de la résistance à la feuille métallique, d'assurer un meilleur enveloppement de la résistance, ce qui est favorable à l'échange thermique, tout en permettant de limiter l'étendue de la zone courbée des parois de la gorge.

Pour réaliser une telle surface chauffante, on procède selon l'invention de la façon suivante:

a) on forme dans ladite feuille métallique, par emboutissage, une première gorge de section sensiblement en U de largeur et de profondeur supérieures au diamètre de la résistance,

b) on forme sur le fond de, ladite première gorge, une seconde gorge en ramenant par emboutissage le fond de la première gorge sensiblement au niveau de la surface plane de la feuille métallique, en formant ainsi sur chacune des parois latérales de la première gorge un pli définissant deux bandes sensiblement jointives et perpendiculaires à la surface plane de la feuille métallique,

c) on place la résistance électrique dans la seconde gorge ainsi formée,

d) on rabat l'une vers l'autre les parois latérales de cette gorge, de manière à envelopper en partie la résistance électrique.

L'expérience a montré que cette succession d'étapes du procédé conforme à l'invention, n'entraînait aucune difficulté technique particulière.

L'invention vise également l'utilisation de la surface chauffante conforme à l'invention, dans des récipients culinaires et des plaques de cuisson.

Dans les récipients culinaires, cette surface chauffante peut être ménagée directement soit sur le fond du récipient, soit sur la paroi latérale de ce dernier.

Dans le cas de plaques de cuisson, ou de plaques de réchauffage d'aliments, la surface chauffante conforme à l'invention peut être ménagée sur le dessus de la plaque.

D'autres particularités et avantages de l'invention apparaîtront encore dans la description ci-après.

Aux dessins annexés donnés à titre d'exemples non limitatifs:

—la figure 1 est une vue en perspective d'une surface chauffante conforme à l'invention,

—la figure 2 est une vue en coupe à plus grande échelle, suivant le plan II—II de la figure 1,

—la figure 3 est un schéma en coupe transversale de la feuille métallique montrant la première étape d'un procédé de réalisation d'une surface chauffante conforme à l'invention,

—la figure 4 est une vue analogue à la figure 3 montrant la seconde étape de ce procédé,

—la figure 5 est une vue analogue aux figures 3 et 4 montrant la dernière étape de ce procédé,

—la figure 6 est une vue partielle en coupe transversale du fond d'un récipient culinaire comportant une surface chauffante conforme à l'invention,

—la figure 7 est une vue en coupe transversale partielle d'une plaque de cuisson comportant une surface chauffante conforme à l'invention,

—la figure 8 est une vue en coupe partielle du fond et de la paroi latérale d'un récipient culinaire, montrant la première étape de réalisation d'une surface chauffante dans un tel récipient,

—la figure 9 est une vue analogue à la figure 8 montrant la seconde étape de ce procédé,

—la figure 10 est une vue analogue aux figures 8 et 9 montrant l'étape finale de ce procédé.

—la figure 11 est une vue en coupe partielle du fond et de la paroi latérale d'un autre récipient culinaire comportant une variante de surface chauffante conforme à l'invention.

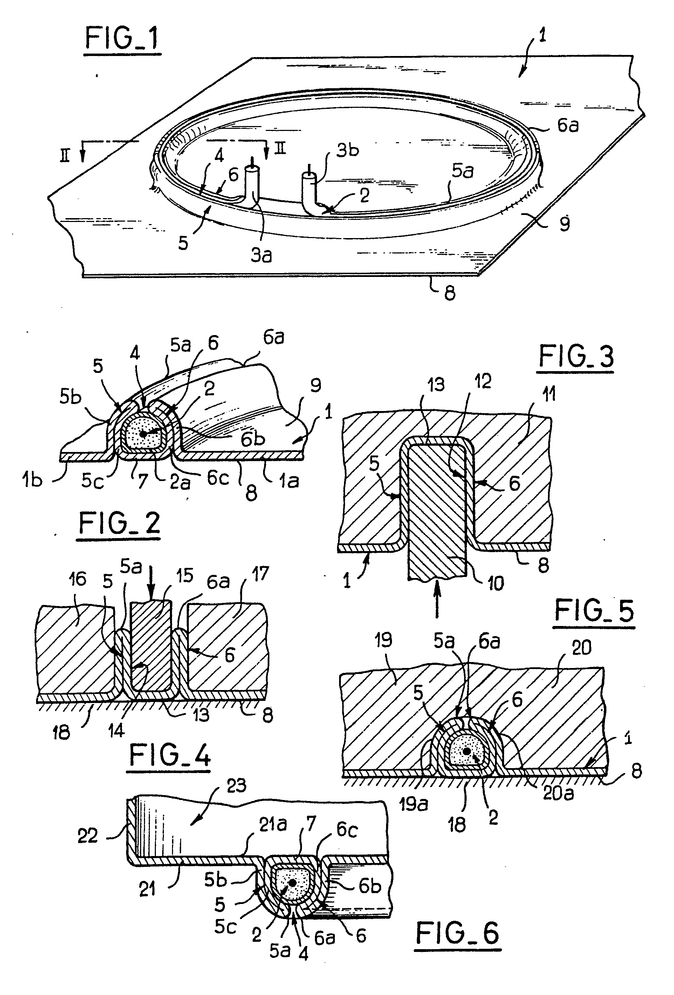

Dans la réalisation de la figure 1, la feuille de métal laminé 1, par exemple en aluminium de 1,5 mm d'épaisseur, comporte une résistance électrique tubulaire blindée 2 qui est sertie dans cette feuille de métal 1. Cette résistance 2, d'un diamètre de 8 mm par exemple est sertie sur toute sa longueur dans la feuille de métal 1, à l'exception de ses extrémités libres 3a et 3b, qui s'écartent de la feuille 1, sensiblement perpendiculairement à celle-ci. Ces extrémités 3a, 3b sont destinés à être raccordées aux conducteurs d'alimentation électrique de la surface chauffante constituée par la feuille métallique 1 et la résistance électrique tubulaire 2.

Comme on le voit sur la figure 2, la résistance électrique 2 est logée dans une gorge 4, dont les parois 5 et 6 sont rabattues sur cette résistance 2, cette dernière étant ainsi sertie dans la gorge 4. Chaque paroi latérale 5 ou 6 est constituée par un pli 5a ou 6a définissant deux bandes jointives 5b, 5c ou 6b, 6c enveloppant chacune en partie la résistance 2. Les deux bandes intérieures 5c et 6c adjacentes à la résistance 2 sont reliées par une portion 7 de la feuille métallique 1 constituant le fond de la gorge 4. Cette portion 7 de la feuille 1 est située dans le prolongement des parties planes 1a, 1b de la feuille 1 situées de part et d'autre de la gorge 4. D'autre part, comme indiqué sur la figure 2, la résistance électrique 2 présente un méplat 2a adjacent au fond 7 de la gorge 4, ce fond 7 étant lui-même sensiblement plan. Grâce à cette disposition, on voit sur la figure 2 que la face 8 de la feuille métallique 1 opposée à la face 9 comportant la gorge 4 est sensiblement plane et exempte de tout relief.

On va maintenant décrire le procédé de réalisation de la surface chauffante représentée sur les figures 1 et 2.

On forme tout d'abord dans la feuille métallique 1, par emboutissage au moyen d'un poinçon 10 et d'une matrice 11, une première gorge 12 de section sensiblement en U, comme indiqué sur la figure 3.

En second lieu, on forme sur le fond 13 de cette première gorge 12, une seconde gorge 14 (voir figure 4) en ramenant par emboutissage au moyen d'un autre poinçon 15 de largeur plus faible que le poinçon 10, le fond 13 de la première gorge 12 sensiblement au niveau de la surface plane 8 de la feuille 1. Lors de cette opération, des parois latérales 5 et 6 de la gorge 12 sont calées latéralement entre deux mâchoires 16 et 17 et la surface plane 8 de la feuille 1 est en appui contre une surface plane fixe 18. On forme ainsi sur chacune des parois latérales 5 et 6 de la première gorge 12, un pli 5a, 5b définissant deux bandes jointives 5b, 5c et 6b et 6c, perpendiculaires à la surface plane 8 de la feuille métallique 1.

On place ensuite la résistance électrique tubulaire 2 sur laquelle on a préalablement réalisé le méplat 2a, dans la seconde gorge 14 ainsi réalisée.

Dans l'étape finale du procédé, on rabat l'une vers l'autre les parois latérales 5 et 6 de cette gorge 14, de manière à envelopper la résistance électrique 2, comme indiqué sur la figure 5. Cette dernière opération est réalisé en déplaçant normalement à la surface fixe 18 un outil de sertissage 19 comportant un évidement arrondi 19a et 20a dont le profil correspond aux profils des parois 5 et 6 que l'on veut réaliser.

La première gorge 12 formée dans la feuille métallique 1 présente une largeur sensiblement égale au diamètre de la résistance 2, plus deux fois l'épaisseur de la feuille métallique 1. La profondeur de cette première gorge 12 est sensiblement égale à deux fois la profondeur de la seconde gorge 14 dont les dimensions sont elles-mêmes adaptées à celles de la gorge 4 que l'on veut réaliser.

La surface chauffante dont on vient de décrire le procédé de réalisation, peut être utilisée dans un ustensile de cuisine à chauffage électrique, tel qu'un récipient de cuisson.

Dans la réalisation de la figure 6, on a représenté le fond 21 et une partie de la paroi latérale 22 d'un récipient de cuisson 23. La surface chauffante conforme à l'invention est directement réalisée dans la feuille métallique qui constitue le fond 21 de ce récipient culinaire 23. La gorge 4 dans laquelle est logée la résistance électrique de chauffage 2 fait saillie vers l'extérieur de ce récipient 3, tandis que la surface intérieure 21a du fond 1 est sensiblement plane étant donné que le fond 7 de la gorge 4 se trouve dans le prolongement des parties planes du fond 21 du récipient situées de part et d'autre de la gorge 4.

Les avantages d'une telle surface chauffante sont nombreux.

Tout d'abord l'absence de saillie sur la face interne 21a du fond 21, facilite considérablement le nettoyage de ce dernier et permet dans la plupart des cas, d'excellentes conditions d'utilisation et de cuisson du récipient culinaire 23.

En second lieu, la résistance 2 est remarquablement bien fixée dans la gorge 4 et se trouve protégée extérieurement contre les chocs mécaniques grâce à la double épaisseur des parois 5 et 6 cette gorge 4.

Les conditions d'échange thermique entre la résistance électrique 2 et la feuille 21 sont excellentes grâce à l'enveloppement total de la résistance par la feuille métallique constituant le fond 21 du récipient.

Aucun contact direct n'existant entre l'intérieur du récipient 23 et la résistance 2, on évite tout risque de surchauffe localisée et tout contact direct entre les aliments et la surface de la résistance électrique 2.

Par ailleurs, étant donné que la résistance 2 se trouve complètement à l'extérieur du récipient 23, le délicat problème du passage étanche des sorties 3a et 3b de la résistance 2 ne se pose pas.

La surface chauffante conforme à l'invention peut également être utilisée pour la réalisation d'une plaque de cuisson, de chauffage ou de maintien en température des aliments.

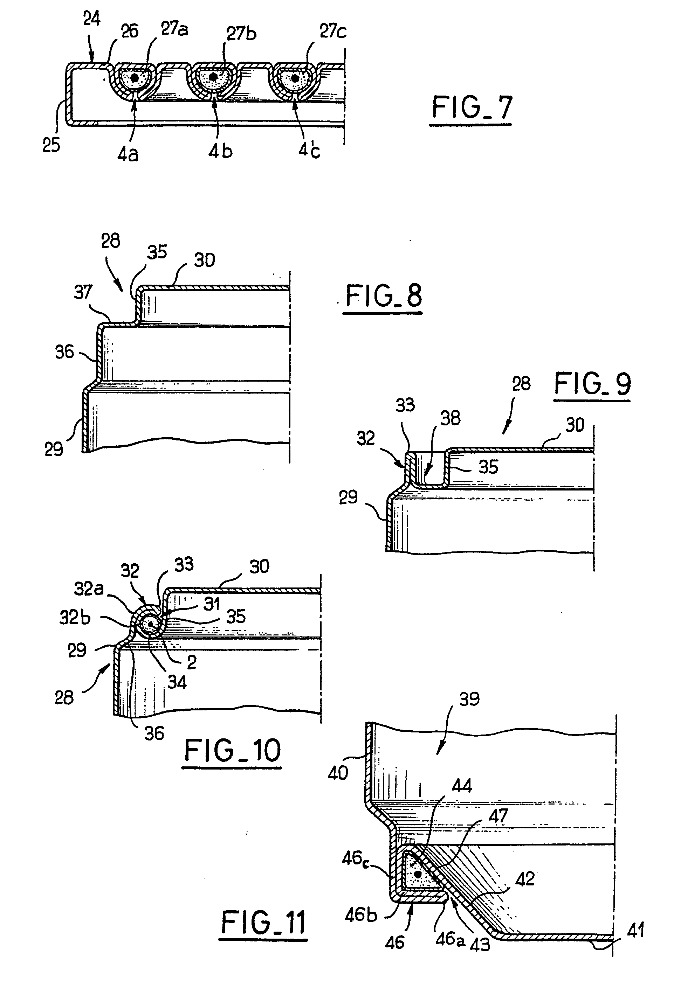

Dans la réalisation de la figure 7, la plaque de cuisson 24 réalisée à partir d'une feuille métallique 25 comporte sur sa face de cuisson 26 une surface chauffante conforme à l'invention. Cette face de cuisson 26 comporte trois gorges 4a, 4b, 4c semblables à la gorge 4 de la réalisation selon les figures 1 et 2, renfermant chacune une résistance électrique tubulaire 27a, 27b et 27c. Dans cet exemple, les gorges 4a, 4b, 4c font saillie vers l'intérieur de la plaque de cuisson 24, tandis que la surface de cuisson 26 est parfaitement plane, c'est-à-dire exempte de saillie due à la présence des résistances 27a, 27b et 27c. Une telle surface de cuisson 26 parfaitement plane, est à la fois très facile à nettoyer et d'autre part, permet un excellent contact thermique avec le fond d'un récipient culinaire destiné à être posé sur cette plaque de cuisson 24.

Dans la réalisation de la figure 10, on a représenté à l'envers, une variante de récipient culinaire comportant une surface chauffante conforme à l'invention.

Ce récipient culinaire 28 réalisé par emboutissage d'une feuille métallique comprend dans sa paroi latérale 29 et près de son fond 30, une résistance électrique tubulaire 2. Celle-ci est sertie dans une gorge 31 emboutie dans la paroi latérale 29. Dans cet exemple, la paroi 32 de cette gorge 31, dirigée vers l'extérieur est constituée par un pli 33 de la feuille métallique définissant deux bandes jointives 32a, 32b qui enveloppent la résistance 2. Le fond 34 de cette gorge 31 est constitué par un prolongement de la bande 32b adjacente à la résistance 2.

Ce fond 34 est lui-même situé sensiblement dans le prolongement des parties 35 et 36 de la paroi latérale 29 situées de part et d'autre de la gorge 31.

Dans la réalisation de la figure 10, la gorge 31 renfermant la résistance électrique 2 forme un relief de la paroi latérale 29 du récipient qui n'est ni accentué vers l'intérieur ni vers l'extérieur du récipient 28. En particulier, le fond 30 de ce récipient est totalement dégagé.

Le procédé pour réaliser la surface chauffante précitée sur le récipient culinaire 28 comporte les étapes suivantes.

On forme tout d'abord dans la paroi latérale 29 du récipient cylindrique 28 un épaulement 37 adjacent aux deux faces cylindriques coaxiales 35 et 36 (voir figure 8).

On forme ensuite par emboutissage dans cet épaulement 37, une gorge de section en U 38 (voir figure 9). La paroi 32 de cette gorge 38 est définie par le pli 33 de la face cylindrique extérieure 36 qui définit les deux bandes jointives 32a et 32b de la feuille métallique. L'autre paroi latérale 35 de cette gorge en U est définie par la face cylindrique 35.

On place ensuite la résistance 2 dans la gorge 38 ainsi constituée.

Pour terminer, on rabat la paroi 32 comportant le pli 33 sur la résistance 2 de façon à envelopper en partie cette dernière, comme indiqué sur la figure 10.

Dans la réalisation de la figure 11, le récipient culinaire 39, comporte une paroi latérale 40 et un fond 41, ce dernier étant raccordé à la paroi latérale 40 par une surface tronconique 42.

Cette surface tronconique 42 porte une gorge 43 définissant un logement de section triangulaire renfermant une résistance électrique 44 de section correspondante. La paroi extérieure 46 de cette gorge 43 est constituée par un pli 46a de la feuille métallique définissant deux bandes de feuilles jointives 46b, 46c enveloppant la résistance 44. Le fond 47 de la gorge 43 est relié à la bande intérieure 46b et est situé dans le prolongement de la surface tronconique 42. Dans cet exemple de réalisation, la gorge 43 ne forme aucune saillie vers l'intérieur du récipient, comme dans le cas de la réalisation selon la figure 6.

Bien entendu l'invention n'est pas limitée aux exemples qui l'on vient de décrire et on peut apporter à ceux-ci de nonbreuses modifications sans sortir du cadre de l'invention.

Ainsi, le fond et/ou la paroi latérale d'un récipient culinaire peut comporter plusieurs gorges adaptées à recevoir plusieurs résistances électriques de chauffage.

Par ailleurs, les extrémités 5a, 6a, des parois 5 et 6 de la gorge 4 (voir figure 6) peuvent être soudées ensemble afin d'améliorer le transfert thermique, ou éviter tout risque de déformations dues à des dilatations du métal.

**Revendications**

1. Surface chauffante notamment pour usages culinaires comportant une résistance électrique de chauffage tubulaire (2, 44) placée contre une première face (9, 7) d'une feuille métallique (1, 21, 29, 42) dont la deuxième face (8, 21a) est destinée à être mise en regard de la matière à chauffer lors de l'utilisation, ladite résistance (2, 44) étant maintenue contre la feuille métallique par sertissage dans une gorge (4, 31, 43) qui est formée par emboutissage de la feuille et qui comporte au moins un bord façonné en forme de pli (5a, 6a, 33, 46a) définissant deux bandes (5c, 5b; 32b, 32a; 46b, 46c) qu'il relie, la première (5c, 32b, 46b) de ces bandes étant adjacente à la résistance et se raccordant au fond (7, 34, 47) de la gorge, cette surface chauffante étant caractérisée en ce que la deuxième bande (5b, 32a, 46c) présente une surface adjacente à celle de la première bande (5c, 32b, 46b) de façon que les surfaces de ces bandes soient jointives, et cette deuxième bande s'étend sensiblement jusqu'au fond (7, 34, 47) de la gorge de façon que ce fond soit proche de la partie de feuille (1b, 21, 36, 42) qui fait suite à cette deuxième bande (5b, 32a, 46c) et que la surface chauffante soit ainsi sensiblement dépourvue de relief saillant du côté de la deuxième face (8, 21a) de la feuille métallique (1, 21, 29, 42).

2. Surface chauffante selon la revendication 1, caractérisée en ce que la gorge comporte deux bords façonnés en forme de pli (5a, 6a) à bandes jointives, et le fond (7) de la gorge est plan ainsi que la partie y adjacente de la résistance et que les partie (1a, 1b) de la feuille (1) qui font suite à cette deuxième bande, et ces parties (1a, 1b) de la feuille et ce fond (7) sont situés dans un même plan.

3: Surface chauffante selon la revendication 1, aménagée dans la paroi d'un récipient culinaire, caractérisée en ce qu'elle ne comporte qu'un seul pli (33) à bandes jointives (32a, 32b), et en ce que la partie de feuille (36) qui fait suite à la deuxième bande (32a) est tronconique.

4. Procédé pour réaliser une surface chauffante conforme à la revendication 2, comportant une étape au cours de laquelle on forme dans une feuille métallique (1), par emboutissage, une gorge (12) de section sensiblement en U, et une autre étape au cours de laquelle on place une résistance tubulaire (2) dans une gorge (14) présentant une largeur sensiblement égale à celle de la résistance, puis on rabat les parois de cette gorge sur la résistance, ce procédé étant caractérisé en ce que

a) après avoir formé une première gorge (12) de largeur sensiblement égale à celle de la résistance augmenté de deux fois l'épaisseur de la feuille, on ramène par emboutissage le fond de cette gorge (12) sensiblement au niveau de la surface plane (8) de la feuille (1) en formant ainsi une deuxième gorge (14) et sur chacune des parois latérales (5, 6) de la première gorge, un pli (5a, 6a) définissant deux bandes (5b, 5c) et (6b, 6c) sensiblement jointives et perpendiculaires à la surface plane de la feuille métallique, et en ce que

b) c'est dans cette deuxième gorge (14) ainsi dotée de parois latérales doubles formées par lesdites bandes que l'on place la résistance (2), après quoi les doubles parois jointives (5b, 5c et 6b, 6c) sont rabattues de manière à envelopper en partie la résistance (2).

5. Procédé pour réaliser une surface chauffante conforme à la revendication 1 ou 3, sur un récipient cylindrique, conique ou cylindro-conique, obtenu par emboutissage d'une feuille métallique, ce procédé comportant une étape au cours de laquelle on forme dans la feuille métallique une gorge de section en U (38) destinée à recevoir une résistance tubulaire (2), ce procédé étant caractérisé en ce que

a) on forme d'abord dans la paroi latérale (29) du récipient (28) un épaulement (37) adjacent à deux faces cylindriques coaxiales (36, 35),

b) pour former ladite gorge à section en U (38), on opère par emboutissage dans cet épaulement en formant, avec la partie de feuille constituant la face cylindrique extérieure (36), un pli (33) définissant deux bandes à surfaces adjacentes sensiblement jointives (32a, 32b) ladite gorge (38) étant comprise entre la bande intérieure (32b) du pli (33) et la face cylindrique intérieure (35), et

c) après avoir placé la résistance (2) dans la gorge (38), on rabat la double paroi (32a, 32b), définie par le pli (33), sur la résistance (2) de façon à envelopper en partie cette dernière.

**Patentansprüche**

1. Heizfläche, insbesondere für Kochzwecke, mit einem rohrförmigen elektrischen Heizwiderstand (2, 44), der gegen eine erste Fläche (9, 7) eines Metallblechs (1, 21, 29, 42) angelegt ist, dessen zweite Fläche (8, 21a) im Gebrauch gegenüber dem zu erhitzenden Stoff angeordnet wird, wobei der Widerstand (2, 44) gegen das Metallblech gehalten wird durch Einfassung in einer Nut (4, 31, 43), die durch Tiefziehen des Bleches gebildet ist und wenigstens einen faltenförmig ausgebildeten Rand (5a; 46a) umfaßt, welcher zwei Streifen (5c, 5b; 32b, 32a; 46b, 46c) bildet, die durch ihn verbunden sind, wobei der erste Streifen (5c; 32b; 46b) an den Widerstand angrenzt und an den Boden (7, 34, 47) der Nut anschließt, wobei diese Heizfläche dadurch gekennzeichnet ist, daß der zweite Streifen (5b, 32a, 46c) eine Oberfläche aufweist, welche an diejenige des ersten Streifens (5c, 32b, 46b) so angrenzt, daß die Oberflächen dieser Streifen aneinander anschließen, und dieser zweite Streifen sich im wesentlichen bis zu dem Boden (7, 34, 47) der Nut erstreckt, so daß dieser Boden nahe demjenigen Teil des Bleches (1b, 21, 36, 42) liegt, der auf diesen zweiten Streifen (5b, 32a, 46c) folgt, und daß die Heizfläche so auf der Seite der zweiten Fläche (8, 21a) des Metallbleches (1, 21, 29, 42) im wesentlichen frei von einem erhabenen Relief ist.

2. Heizfläche nach Anspruch 1, dadurch gekennzeichnet, daß die Nut zwei faltenförmig ausgebildete Ränder (5a, 6a) in Form von aneinander anschließenden Streifen umfaßt und der Boden (7) der Nut eben ist, ebenso wie der daran angrenzende Teil des Widerstandes, und daß diejenigen Teile (1a, 1b) des Bleches (1), die auf diesen zweiten Streifen folgen, sowie diese Teile (1a, 1b) des Bleches und dieser Boden (7) in derselben Ebene liegen.

3. Heizfläche nach Anspruch 1, welche in der Wandung eines Kochbehälters angeordnet ist, dadurch gekennzeichnet, daß sie nur einen einzigen Falz (33) mit aneinander anschließenden Streifen (32a, 32b) umfaßt und daß derjenige Teil des Bleches (36), der auf den zweiten Streifen (32a) folgt, kegelstumpfförmig ist.

4. Verfahren zur Herstellung einer Heizfläche nach Anspruch 2, mit einem Arbeitsschritt, währenddessen in einem Metallblech (1) durch Tiefziehen eine Nut (12) von im wesentlichen U-förmigem Querschnitt gebildet wird, und einen weiteren Arbeitsschritt enthält, währenddessen ein rohrförmiger Widerstand (2) in eine Nut (14) eingelegt wird, die eine Breite aufweist, welche im wesentlichen der des Widerstands entspricht, woraufhin die Wandungen dieser Nut über den Widerstand umgebogen werden, wobei dieses Verfahren dadurch gekennzeichnet ist, daß:

a) nach Bildung einer ersten Nut (12), deren Breite im wesentlichen gleich derjenigen des Widerstandes zuzüglich der doppelten Stärke des Bleches ist, der Boden dieser Nut (12) im wesentlichen auf die Höhe der ebenen Oberfläche (8) des Bleches (1) zurückgeschoben wird, wobei so eine zweite Nut (14) gebildet wird und an jeder der Seitenwandungen (5, 6) der ersten Nut ein Falz (5a, 6a) gebildet wird, die jeweils zwei Streifen (5b, 5c) und (6b, 6c) definieren, welche im wesentlichen aneinander anschließen und senkrecht zu der ebene Oberfläche des Metallbleches sind, und daß

b) in diese zweite Nut (14), welche auf diese Weise mit doppelten Seitenwänden versehen wurde, die durch die genannten Streifen gebildet sind, der Widerstand (2) eingelegt wird, woraufhin die doppelten, aneinander anschließenden Seitenwände (5b, 5c und 6b, 6c) derart umgebogen werden, daß sie den Widerstand (2) teilweise umhüllen.

5. Verfahren zur Herstellung einer Heizfläche nach Anspruch 1 oder 3 an einem zylindrischen, konischen oder zylindrisch-konischen Behälter, der durch Tiefziehen eines Metallblechs erhalten wird, wobei dieses Verfahren einen Arbeitsschritt umfaßt, währenddessen in dem Metallblech eine Nut (38) mit im wesentlichen U-förmigem Querschnitt gebildet wird, die zur Aufnahme eines rohrförmigen Widerstandes (2) bestimmt sit, wobei das Verfahren dadurch gekennzeichnet ist, daß:

a) zunächst in der Seitenwand (29) des Behälters (28) eine Schulter (37) gebildet wird, welche an zwei koaxiale zylindrische Flächen (36, 35) angrenzt,

b) zur Bildung der genannten Nut (38) mit U-förmigem Querschnitt in dieser Schulter durch Tiefziehen aus demjenigen Teil des Bleches, der die äußere zylindrische Fläche (36) bildet, ein Falz (33) gebildet wird, welcher zwei Streifen mit aneinander angrenzenden und im wesentlichen aneinander anschließenden Oberflächen (32a, 32b) definiert, wobei die Nut (38) zwischen dem inneren Streifen (32b) des Falzes (33) und der inneren zylindrischen Fläche (35) liegt, und

c) nach Einlegen des Widerstands (2) in die Nut (38) die doppelte Wandung (32a, 32b), welche durch den Falz (33) gebildet ist, über den Widerstand (2) derart umgebogen wird, daß dieser teilweise umhüllt wird.

**Claims**

1. Heating surface, especially for culinary purposes, comprising a tubular electric heating resistor (2, 44) placed against a first face (9, 7) of a metal sheet (1, 21, 29, 42), the second face (8, 21a) of which is intended to be placed opposite to the material to be heated at the time of use, said resistor (2, 44) being maintained against the metal sheet by crimping within a channel (4, 31, 43) which is formed by die-stamping of the sheet and which has at least one edge so shaped as to form a pleat (5a, 6a, 33, 46a) defining two strips (5c, 5b; 32b, 32a; 46b, 46c) which it joins together, the first of these strips (5c, 32b, 46b) being adjacent to the resistor and joined to the bottom portion (7, 34, 47) of the channel, this heating surface being characterized in that the second strip (5b, 32a, 46c) has a surface which is adjacent to that of the first strip (5c, 32b, 46b) in such a manner as to ensure that the surfaces of these strips are juxtaposed, and this second strip extends substantially to the bottom portion (7, 34, 47) of the channel in such a manner as to ensure that this bottom portion is close to that portion of the sheet (1b, 21, 36, 42) which follows this second strip (5b, 32a, 46c) and that the heating surface is thus substantially without any salient portion on the side corresponding to the second face (8, 21a) of the metal sheet (1, 21, 29, 42).

2. Heating surface in accordance with claim 1, characterized in that the channel has two edges shaped in the form of pleats (5a, 6a) consisting of juxtaposed strips, and the bottom portion (7) of the channel is flat as is also the case with that portion of the resistor which is adjacent thereto and that the portions (1a, 1b) of the sheet (1) which follow this second strip and these portions (1a, 1b) of the sheet and this bottom portion (7) are located in the same plane.

3. Heating surface in accordance with claim 1, formed in the wall of a culinary vessel, characterized in that it has only one pleat (33) consisting of juxtaposed strips (32a, 32b) and that the portion of sheet (36) which follows the second strip (32a) is frusto-conical.

4. Method for forming a heating surface in accordance with claim 2, comprising a step during which a channel (12) having a substantially U-shaped cross-section is formed in a metal sheet (1) by die-stamping, and another step during which a tubular resistor (2) is placed within a channel (14) having a width substantially equal to that of the resistor, whereupon the walls of this channel are bent inwards against the resistor, this method being characterized in that

a) after having formed a first channel (12) having a width substantially equal to that of the resistor increased by twice the thickness of the sheet, the bottom portion of this channel (12) is brought back by die-stamping substantially to the level of the flat surface (8) of the sheet (1), thus forming a second channel (14) and a pleat (5a, 6a) on each of the side walls (5, 6) of the first channel, thereby defining two strips (5b, 5c) and (6b, 6c) which are substantially juxtaposed and perpendicular to the flat surface of the metal sheet, and that

b) the resistor (2) is placed within this second channel (14) which has thus been provided with double side walls formed by said strips, whereupon the double juxtaposed walls (5b, 5c and 6b, 6c) are bent inwards so as to surround the resistor (2) to a partial extent.

5. Method for forming a heating surface in accordance with claim 1 or 3 on a cylindrical, conical or cylindrical-conical vessel obtained by die-stamping of a metal sheet, this method being such as to include a step during which there is formed in the metal sheet a channel having a U-shaped cross-section (38) which is intended to receive a tubular resistor (2), this method being characterized in that

a) there is first formed in the side wall (29) of the vessel (28) an annular shoulder (37) which is adjacent to two coaxial cylindrical faces (36, 35),

b) in order to form said U-section channel (38), a die-stamping operation is performed in this annular shoulder and a pleat (33) is formed with the portion of sheet which constitutes the outer cylindrical surface (36), thus defining two strips having substantially juxtaposed adjacent surfaces (32a, 32b), said channel (38) being located between the inner strip (32b) of the pleat (33) and the inner cylindrical face (35), and

c) after having placed the resistor (2) within the channel (38), the double wall (32a, 32b) defined by the pleat (33) is bent inwards against the resistor (2) so as to surround this latter to a partial extent.

**0 035 456**

FIG_1

FIG_2

FIG_3

FIG_4

FIG_5

FIG_6

FIG_7

FIG_8

FIG_9

FIG_10

FIG_11